# EUROPEAN PATENT APPLICATION

(11) **EP 2 631 746 A1**
(43) Date of publication of application: **28.08.2013**
(21) Application number: 12156972.7
(22) Date of filing: 24.02.2012
(51) Int. Cl.: G06F 3/041, G06F 3/01

(54) **Portable electronic device including touch-sensitive display and method of controlling same**

(71) Applicant: Research In Motion Limited, Waterloo, ON N2L 3W8 (CA)
(72) Inventor: Almalki, Nazih, Waterloo, Ontario N2L 3W8 (CA)
(74) Representative: Fennell, Gareth Charles

(57) **Abstract**

A method includes detecting touches on a touch-sensitive display of an electronic device, actuating an actuator to provide tactile feedback for the touches, determining values associated with force applied by the actuator during actuation of the actuator, and changing an attribute of actuation of the actuator based on the values associated with force.

## Description

### FIELD OF TECHNOLOGY

The present disclosure relates to electronic devices including but not limited to portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth^{®} capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

### SUMMARY

A method includes detecting touches on a touch-sensitive display of an electronic device, actuating an actuator to provide tactile feedback for the touches, determining values associated with force applied by the actuator during actuation of the actuator, and changing an attribute of actuation of the actuator based on the values associated with force. An electronic device includes a touch-sensitive display operable to detect a touches thereon, an actuator operable to apply force to the touch-sensitive display to provide tactile feedback for the touches, at least one force sensor arranged to determine values associated with the force at the at least one force sensor, and at least one processor, operably coupled to the touch-sensitive display and to the at least one force sensor, and configured to determine values associated with force applied by the actuator, and change an attribute of actuation based on the values associated with force at the at least one force sensor.

### BRIEF DESCRIPTION OF THE DRAWINGS

FIG. 1 is a block diagram of a portable electronic device in accordance with the disclosure.

FIG. 2 is a front view of an example of a portable electronic device in accordance with the disclosure.

FIG. 3 is a sectional side view of the portable electronic device including a depressed touch-sensitive display in accordance with the disclosure.

FIG. 4 is a sectional side view of a piezoelectric actuator of the portable electronic device in accordance with the disclosure.

FIG. 5 is a sectional side view of a piezoelectric actuator with a force sensor in accordance with the disclosure.

FIG. 6 is a block including force sensors and actuators of the portable electronic device in accordance with the disclosure.

FIG. 7 is a flowchart illustrating a method of controlling an electronic device in accordance with the present disclosure.

FIG. 8 is an example illustrating force applied by an actuator during actuation in accordance with the present disclosure.

### DETAILED DESCRIPTION

The following describes an electronic device and method including detecting touches on a touch-sensitive display of an electronic device, actuating an actuator to provide tactile feedback for the touches, determining values associated with force applied by the actuator during actuation of the actuator, and changing an attribute of actuation of the actuator based on the values associated with force.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

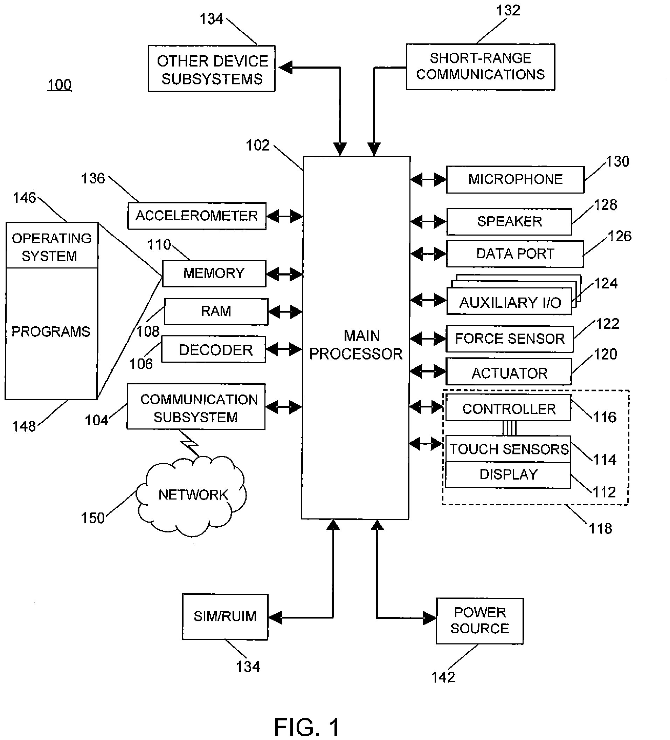

A block diagram of an example of a portable electronic device 100 is shown in FIG. 1. The electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. Other different types of actuators 120 may be utilized than those described herein. When force is applied, the touch-sensitive display 118 is depressible, pivotable, and/or movable.

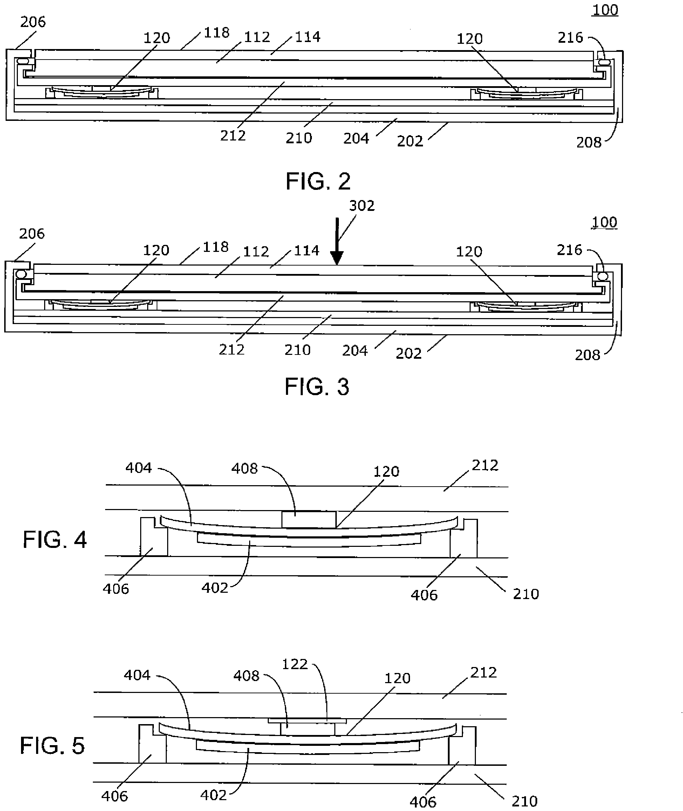

A cross section of a portable electronic device 100 taken through the centers of piezoelectric ("piezo") actuators 120 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204, and supports the actuators 120. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The touch-sensitive display 118 is moveable and depressible with respect to the housing 202. A force 302 applied to the touch-sensitive display 118 moves, or depresses, the touch-sensitive display 118 toward the base 210. When sufficient force is applied, the actuator 120 is depressed or actuated as shown in FIG. 3. The touch-sensitive display 118 may also pivot within the housing to depress the actuator 120. The actuators 120 may be actuated by pressing anywhere on the touch-sensitive display 118. The processor 102 receives a signal when the actuator 120 is depressed or actuated.

A cross section taken through the center of a piezo actuator 120 is shown in FIG. 4. The actuator 120 may comprise one or more piezo devices or elements 402. The piezo actuator 120 is shown disposed between the base 210 and the touch-sensitive display 118. The piezo actuator 120 includes a piezoelectric element 402, such as a piezoelectric ceramic disk, fastened to a substrate 404, for example, by adhesive, lamination, laser welding, and/or by other suitable fastening method or device. The piezoelectric material may be lead zirconate titanate or any other suitable material. Although the piezo element 402 is a ceramic disk in this example, the piezoelectric material may have any suitable shape and geometrical features, for example a non-constant thickness, chosen to meet desired specifications.

The substrate 404, which may also be referred to as a shim, may be comprised of a metal, such as nickel, or any other suitable material such as, for example, stainless steel, brass, and so forth. The substrate 404 bends when the piezo element 402 contracts diametrically, as a result of build up of charge at the piezo element 402 or in response to a force, such as an external force applied to the touch-sensitive display 118.

The substrate 404 and piezo element 402 may be suspended or disposed on a support 406 such as a ring-shaped frame for supporting the piezo element 402 while permitting flexing of the piezo actuator 120 as shown in FIG. 4. The supports 406 may be disposed on the base 210 or may be part of or integrated with the base 210, which may be a printed circuit board. Optionally, the substrate 404 may rest on the base 210, and each actuator 120 may be disposed, suspended, or preloaded in an opening in the base 210. The actuator 120 is not fastened to the support 406 or the base 210 in these embodiments. The actuator 120 may optionally be fastened to the support 406 through any suitable method, such as adhesive or other bonding methods.

A pad 408 may be disposed between the piezo actuator 120 and the touch-sensitive display 118. The pad 408 in the present example is a compressible element that may provide at least minimal shock-absorbing or buffering protection and may comprise suitable material, such as a hard rubber, silicone, and/or polyester, and/or other materials. The pad 408 are advantageously flexible and resilient and may provide a bumper or cushion for the piezo actuator 120 as well as facilitate actuation of the piezo actuator 120 and/or one or more force sensors 122 that may be disposed between the piezo actuators 120 and the touch-sensitive display 118. When the touch-sensitive display 118 is depressed, the force sensor 122 generates a force signal that is received and interpreted by the microprocessor 102. The pad 408 is advantageously aligned with a force sensor 122 to facilitate the focus of forces exerted on the touch-sensitive display 118 onto the force sensors 122. The pads 408 transfer forces between the touch-sensitive display 118 and the actuators 120 whether the force sensors 122 are above or below the pads 408. The pads 408 facilitate provision of tactile feedback from the actuators 120 to the touch-sensitive display 118 without substantially dampening the force applied to or on the touch-sensitive display 118.

A force sensor 122 is disposed between the piezo actuator 120 and the touch-sensitive display 118 as shown in FIG. 5. The force sensor 122 may be disposed between the touch-sensitive display 118 and the pad 408 or between the pad and the piezo actuator 120, to name a few examples. The force sensors 122 may be force-sensitive resistors, strain gauges, piezoelectric or piezoresistive devices, pressure sensors, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. A piezoelectric device, which may be the piezo element 402, may be utilized as a force sensor.

Force information associated with a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

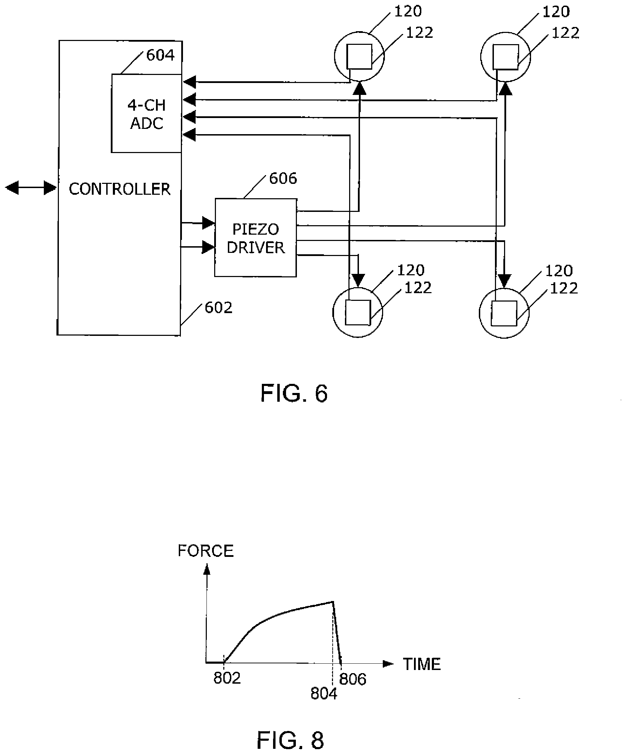

A block diagram including force sensors and actuators of the portable electronic device 100 is shown in FIG. 6. In this example, each force sensor 122 is electrically connected to a controller 602, which includes an amplifier and analog-to-digital converter (ADC) 604. Each force sensor 122 may be, for example, a force-sensing resistor wherein the resistance changes as force applied to the force sensor 122 changes. As applied force on the touch-sensitive display 118 increases, the resistance decreases. This change is determined via the controller 116 for each of the force sensors 122, and a value representative of the force at each of the force sensors 122 may be determined.

The piezo actuators 120 are electrically connected to a piezo driver 604 that communicates with the controller 602. The controller 602 is also in communication with the main processor 102 of the portable electronic device 100 and may exchange signals with the main processor 102. The piezo actuators 120 and the force sensors 122 are operatively connected to the main processor 102 via the controller 602. The controller 602 controls the piezo driver 606 that controls the current/voltage to the piezoelectric devices 402 of the actuator 120, and thus the controller 602 controls the force applied by the piezo actuators 120 on the touch-sensitive display 118. The piezoelectric devices 402 may be controlled individually via a separate control line between each actuator 120 and the controller 602. Different signals may be sent to each different actuator 120. Alternatively, the piezoelectric devices 402 may be controlled substantially equally and concurrently, for example, by the same signal that may be provided through a common control line that extends to each actuator 120 or by individual control lines such as shown in FIG. 6.

The tactile feeling of switches, actuators, keys, other physical objects, and so forth may be simulated, or a non-simulated tactile feedback may be provided by controlling the piezoelectric devices 402. For example, when a force applied on the touch-sensitive display 118 exceeds a depression threshold, the voltage/charge at the piezo actuators 120 is modified such that the piezo actuator 120 imparts a force on the touch-sensitive display 118, which force may, for example, simulate depression of a dome switch. When the force applied on the touch-sensitive display 118 falls below a release threshold, the voltage/charge at the piezo actuators 120 is modified such that the piezo actuator 120 imparts a force or discontinues imparting a force on the touch-sensitive display 118, which may, for example, simulate release of a dome switch.

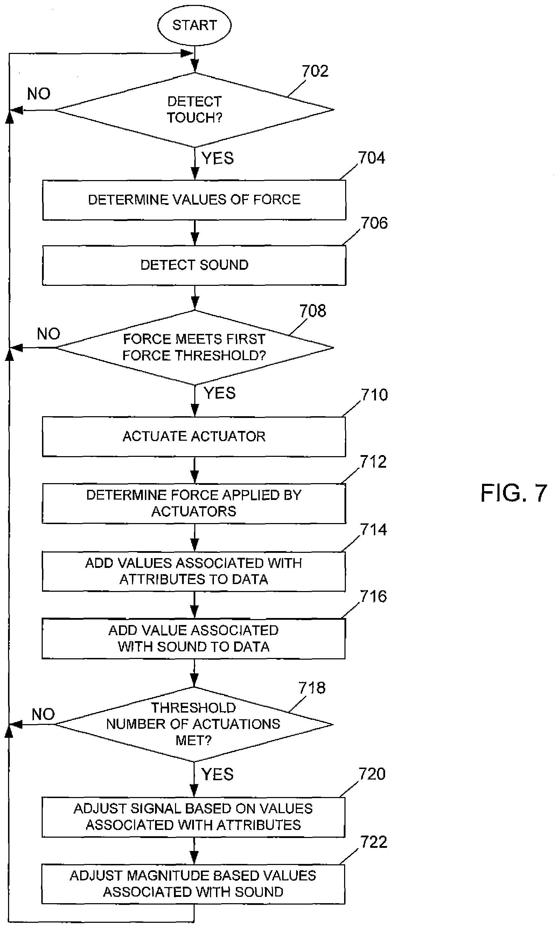

A flowchart illustrating an example of a method of detecting touches on the touch-sensitive display 118 is shown in FIG. 7. The method may be carried out by software executed, for example, processor 102 and/or the controller 116. Coding of software for carrying out such a method is within the scope of a person of ordinary skill in the art given the present description. The method may contain additional or fewer processes than shown and/or described, and may be performed in a different order. Computer-readable code executable by at least one controller or processor of the portable electronic device to perform the method may be stored in a computer-readable medium, such as a non-transitory computer-readable medium.

When a touch is detected 702, the location of touch on the touch-sensitive display 118 is determined. Signals from the force sensors 122 are received and a value associated with the force on the touch-sensitive display 118 is repeatedly determined 704 during the touch, based on the signals from the force sensors 122.

The value associated with the force on the touch-sensitive display 118 may be determined, for example, by summing the values at each of the force sensors 122. The sum of the values is equal to the total force applied at the touches, prior to actuation of the actuator 120. When a single touch is detected, the force applied at the touch is equal to the sum of the values at each of the force sensors 122. When two touches are detected, the force at each touch may be determined based on the locations of the touches, the locations of the force sensors, and the value associated with the force at each of the force sensors 122.

Signals from the microphone 130 are also received and a value associated with the sound detected utilizing the microphone is determined 706. The value associated with the sound is continually detected during the touch.

The force associated with a touch is compared 708 to a first force threshold. When the force value associated with a touch does not exceed the first threshold, the process returns to 702, and the actuators 120 are not actuated. When a force value associated with a touch meets the first threshold, also referred to as the actuation force of the actuators 120, the actuators 120 are actuated 710. A value meets a threshold when the value is equal to or exceeds the threshold.

A value associated with the force imparted by the actuators during actuation is determined 712. The value associated with the force imparted by the actuators 120 is determined by subtracting the value associated with the force immediately prior to actuation from the value associated with the force during actuation. The value associated with the force imparted by the actuators during actuation is repeatedly determined to determine values associated with attributes of actuation such as duration of actuation.

The values associated with the attributes determined at 712 may be stored 714 in memory, such as RAM 108. Data associated with the sound may also be stored 716 in memory, such as RAM 108. The data may be a value, such as a maximum value, or the value associated with the greatest volume of sound.

The number of actuations for which data is stored is compared 718 to a threshold, and when the number of actuations meets the threshold, the process continues at 718. The process does not continue at 718 each time the actuators 120 are actuated. Values associated with the attributes and values associated with the sound are collected for multiple actuations. This threshold is utilized to determine when sufficient data is collected to determine characteristics of actuation with a high level of confidence.

The attributes of actuation are adjusted 720 based on the values associated with the attributes. For example, a representative value, such as an average value, may be determined based on the values associated with the attributes and the average value may be compared to a target value. The current/voltage waveform or signal sent to the actuators may be adjusted to change the duration of all or part of the actuation such that the value associated with the attribute more closely approximates the target value. For example, a duration of actuation may be increased or decreased to a value that is closer to the target value. Alternatively, the representative value may be compared to a low attribute threshold and to a high attribute threshold, and the signal to the actuators may be adjusted until the representative value is between the attribute thresholds.

The maximum value associated with the force may also be adjusted 722 based on the values associated with the sound. A representative value may be determined, for example by calculating an average value based on the data associated with the sound. The average value may be compared to a target value. The current/voltage signal to the piezo actuators 120 may be increased or decreased, changing a magnitude of the force imparted by the actuators 120. The change in magnitude of the force increases or decreases the sound to more closely approximate the target value. Alternatively, the representative value may be compared to a low sound threshold and to a high sound threshold and the magnitude of the signal to the actuators may be adjusted by increasing the force when the value does not meet a low threshold, and decreasing the force when the value exceeds a high threshold.

A simplified example of a graph of force imparted by the piezo actuators 120 versus time is illustrated in FIG. 8. The force applied by the piezo actuators 120 is related to the current/voltage that is sent to the piezo actuators 120. Prior to actuation, no force is imparted by the piezo actuators 120 to the touch-sensitive display 118 in this example. When a force value associated with a touch meets the threshold, actuation of the actuator begins at 802. The current/voltage to the piezo actuators 120 is controlled to ramp up the force imparted by the piezo actuators 120 between time 802 and time 804. The force is decreased between time 804 and time 806. The force is decreased to zero or no applied force over a much shorter period of time relative to the period of time to ramp up the force. The period of time to decrease the force is relatively short to simulate collapse of a dome switch.

The values associated with the attributes of the actuation include, for example, duration of ramp-up and duration of the decrease in force. Time values associated with the ramp-up and decrease are stored in memory. A value associated with the sound produced by the actuation is also stored in memory. When the actuator is actuated a threshold number of times, the ramp-up period of time and the period of time during which the force is decreased may be adjusted. The two periods of time may be adjusted together or individually to adjust the duration of actuation. The maximum force at time 804 may also be increased or decreased based on the value associated with the sound produced by the actuation. The duration and the maximum force value may be adjusted by adjusting the current/voltage waveform to the piezo actuators 120.

The example of FIG. 8 illustrates force imparted by the actuators to simulate collapse of a dome switch. The method described may also be utilized to adjust attributes and values of force during simulation of release of a dome switch. The release may be simulated when the force associated with a touch meets or falls below a second threshold. The second threshold is lower than the first threshold. Alternatively, the attributes and values of force during simulation of release of a dome switch may be adjusted based on the adjustments to the attributes and values of force during simulation of depression of a dome switch.

After adjusting the signal to adjust a duration of the actuation and adjusting the magnitude or maximum force value, new values associated with attributes and values associated with sound may be collected and old values discarded or removed from memory. Optionally, the values may continue to be collected along with previously collected values. For example, the values may be added to other values in a first-in first-out (FIFO) arrangement.

In the above description, a single touch is described. The method of FIG. 7 is equally applicable to multiple touches that at least partially overlap in time. When multiple touches that at least partially overlap in time are received, the value of force at each touch may be determined utilizing any suitable method, based on the values associated with force determined at each of the force sensors 122, the location of each of the force sensors 122, and the locations of the touches. The process may continue for each touch.

Attributes of actuation, such as duration, and the magnitude or maximum value of force are changed based on values measured at the force sensors and based on signals from the microphone. The changes may be made during use of the portable electronic device and without entering a separate calibration routine. Changes in tactile feedback provided by the actuators due to age or other factors, for example, may be compensated for by application of the above method.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
detecting touches on a touch-sensitive display of an electronic device;
actuating an actuator to provide tactile feedback for the touches;
determining values associated with force imparted by the actuator during actuation of the actuator;
changing an attribute of actuation of the actuator based on the values associated with force.

2. The method according to claim 1, wherein changing comprises changing a duration of actuation of the actuator.

3. The method according to claim 2, comprising:
determining a value associated with sound detected during actuation of the actuator;
changing a magnitude of the force based on the value associated with sound.

4. The method according to claim 1, wherein changing comprises changing an electrical signal applied to the actuator.

5. The method according to claim 1, wherein determining comprises identifying values associated with force imparted by the actuator in response to a plurality of the detected touches.

6. The method according to claim 1, wherein determining comprises subtracting a value measured prior to actuation, from values measured during actuation.

7. The method according to claim 1, comprising changing a magnitude of the force based on a value associated with sound.

8. The method according to claim 7, wherein the magnitude of force is increased when the value associated with sound not meet a first threshold and the magnitude of force is decreased when the value associated with sound exceeds a second threshold.

9. The method according to claim 7, wherein changing a magnitude comprises increasing an electrical signal applied to the actuator.

10. The method according to claim 1, wherein changing comprises decreasing a duration of an electrical signal utilized to actuate the actuator.

11. The method according to claim 1, wherein the actuator is actuated when an applied force for any of the touches meets a threshold.

12. The method according to claim 1, wherein changing comprises changing based on the determined values for a threshold number of actuations.

13. The method according to claim 1, wherein changing comprises changing the attribute based on a comparison of a value of the attribute with a target value.

14. A computer-readable medium having computer-readable code executable by at least one processor of a portable electronic device to perform the method according to any one of claims 1 to 13.

15. An electronic device comprising:
a touch-sensitive display operable to detect touches;
an actuator operable to apply force to the touch-sensitive display to provide tactile feedback for the touches;
at least one force sensor arranged to determine values associated with force at the at least one force sensor;
at least one processor, operably coupled to the touch-sensitive display and to the at least one force sensor, and configured to determine values associated with force applied by the actuator, and change an attribute of actuation based on the values associated with force at the at least one force sensor.
